(19) Europäisches Patentamt
European Patent Office
Office européen des brevets

(11) EP 3 262 860 B1

(12) FASCICULE DE BREVET EUROPEEN

(45) Date de publication et mention
de la délivrance du brevet:
**14.07.2021 Bulletin 2021/28**

(21) Numéro de dépôt: **15823701.6**

(22) Date de dépôt: **22.12.2015**

(51) Int Cl.:
*H04W 12/06* (2021.01)    *H04W 12/08* (2021.01)
*H04L 29/06* (2006.01)    *H04W 12/04* (2021.01)
*G07C 9/00* (2020.01)    *H04L 9/08* (2006.01)
*H04W 12/50* (2021.01)    *H04L 9/32* (2006.01)
*B60R 25/24* (2013.01)    *H04W 4/00* (2018.01)
*H04L 29/08* (2006.01)    *H04W 4/40* (2018.01)

(86) Numéro de dépôt international:
**PCT/FR2015/053717**

(87) Numéro de publication internationale:
**WO 2016/102887 (30.06.2016 Gazette 2016/26)**

(54) **PROCÉDÉ DE RECONNAISSANCE AUTOMATIQUE ENTRE UN APPAREIL MOBILE ET UN VÉHICULE AUTOMOBILE APTES À FONCTIONNER SELON LE PROTOCOLE BLE**

AUTOMATISCHES ERKENNUNGSVERFAHREN ZWISCHEN EINEM MOBILEN ENDGERÄT UN EINEM FAHRZEUG UNTER VERWENDUNG DES BLE-PROTOKOLLS

AUTOMATIC RECOGNITION METHOD BETWEEN A MOBILE DEVICE AND A VEHICLE USING THE BLE PROTOCOL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2014 FR 1403002**

(43) Date de publication de la demande:
**03.01.2018 Bulletin 2018/01**

(73) Titulaire: **Valeo Comfort and Driving Assistance 94046 Créteil Cedex (FR)**

(72) Inventeur: **PETEL, Laurent 94046 Créteil Cedex (FR)**

(74) Mandataire: **Delplanque, Arnaud VALEO Comfort and Driving Assistance 76, rue Auguste Perret Z.I. Europarc 94046 Créteil Cedex (FR)**

(56) Documents cités:
**EP-A2- 0 492 692**    **WO-A2-2008/063899**
**FR-A1- 2 774 833**    **US-A1- 2009 251 279**
**US-A1- 2014 169 564**    **US-A1- 2014 188 348**
**US-A1- 2014 282 974**    **US-B1- 7 366 677**

- **Alfred Menezes ET AL: "Handbook of Applied Cryptography, Chap 10: Identification and Entity Authentication" In: "Handbook of Applied Cryptography; [CRC PRESS SERIES ON DISCRETE MATHEMATICS AND ITS APPLICATIONS]", 1 janvier 1997 (1997-01-01), CRC Press, XP055141231, pages 385-424, Chapitre 10.3; page 397 - page 405**
- **None**

**Description**

## DOMAINE TECHNIQUE DE L'INVENTION

La présente invention se rapporte à un procédé de reconnaissance automatique entre un appareil électronique mobile de communication et un module électronique d'un véhicule automobile, ledit appareil mobile de communication et ledit module électronique du véhicule automobile étant aptes à échanger selon le protocole Bluetooth Smart ou Bluetooth Low Energy (BLE). Le domaine technique de l'invention est celui de l'accès aux véhicules automobiles par des moyens autres que l'utilisation de clés mécaniques.

On entendra par appareil électronique mobile de communication dans le cadre du présent document tout dispositif électronique permettant à une personne d'accéder à des données et informations par l'intermédiaire d'au moins un réseau de télécommunication (par exemple de type GSM ou Bluetooth).Les termes "appareils mobiles de communication" comprennent ainsi les téléphones mobiles, plus particulièrement du type Smartphones, les ordinateurs portables, les tablettes, les assistants numériques personnels (PDAs) etc... Dans le présent document, à titre d'exemple non limitatif, l'appareil mobile de communication sera un smartphone dans les différentes situations exposées. Par abus de langage, on désignera le véhicule automobile en lieu et place du module électronique qu'il comporte. On entendra par locataire une personne qui va louer/emprunter ou qui loue/emprunte un véhicule. Dans le cadre de la présente invention, l'utilisateur est nécessairement équipé d'un appareil mobile de communication, notamment de type smartphone.

## ETAT DE LA TECHNIQUE ANTERIEURE

Un utilisateur d'un véhicule peut aujourd'hui, grâce à la mise en œuvre d'un processus d'échanges sécurisés, contrôler, au moyen d'une application dédiée, l'exécution d'une fonction - ou commande - d'un véhicule au moyen d'un appareil mobile de communication, comme par exemple un smartphone. La fonction - ou commande - concernée est par exemple une commande parmi les suivantes : verrouillage/déverrouillage du véhicule, démarrage du véhicule, parking automatique... Dans certaines applications, afin de pouvoir mettre en œuvre une de ces commandes, l'appareil mobile doit avoir préalablement mémorisé une clé d'identification autorisant l'exécution d'au moins une commande du véhicule. La mémorisation de la clé d'identification peut s'effectuer dans un élément sécurisé du smartphone, par exemple sa carte SIM ou tout autre élément sécurisé. L'utilisateur, en conservant le smartphone sur lui, peut ainsi par exemple déverrouiller la serrure d'un ouvrant du véhicule. Pour ce faire, des données, notamment des données d'authentification contenues dans la clé d'identification, et donc dans le smartphone, sont échangées entre ledit smartphone et un module électronique du véhicule qui détermine si la clé d'identification du véhicule est valide. Dans des modes de mise en œuvre avantageux, ces échanges de données sont réalisés en respectant le protocole BLE.

Dans le cas où le véhicule est partagé par une pluralité d'utilisateurs, la clé d'identification mémorisée sur le smartphone de l'utilisateur est une clé d'identification qui dans certaine configuration peut être temporaire c'est-à-dire qu'elle n'est valide que pour une durée limitée dans le temps. Les informations relatives à la durée de validité sont avantageusement contenues dans le code constituant la clé d'identification temporaire. Dans le cas d'un véhicule d'utilisation, la durée de validité de la clé d'identification temporaire correspond alors à la durée de l'utilisation du véhicule. La clé d'identification temporaire est obtenue après que l'utilisateur a effectué toutes les opérations nécessaires à l'utilisation du véhicule (réservation, paiement...). La clé d'identification dans tous les cas peut être par exemple transférée selon le protocole BLE,mais aussi NFC, wifi ou via une dispositif optique électronique comme par exemple à l'aide de la camera du smartphone qui capture l'image d'un code (QR ou Code barre), depuis une borne automatique disposée à proximité du véhicule à louer vers le smartphone, ou bien envoyée via un réseau de communication mobile de type GSM depuis un serveur distant vers le smartphone.

Dans le cadre où les échanges entre le smartphone et le véhicule automobile s'opère selon protocole BLE, le véhicule automobile est placé en en mode "advertising" pendant de longues périodes - voire en permanence -. Le mode "advertising" est un mode du protocole BLE dans lequel le véhicule émet régulièrement des messages qui lui permettent de signaler sa présence, et éventuellement de communiquer certaines informations. Les informations communiquées sont par exemple une information consistant à indiquer qu'il dispose du service utilisé par l'application dédiée.

Dans l'état de la technique, pour recevoir et prendre en compte les instructions émises par le smartphone SP via l'application dédiée, le véhicule aura dû être préalablement appairé avec le smartphone.

Le smartphone est pour sa part placé dans le mode "scanning" du protocole BLE : Le mode scanning est un mode du protocole BLE qui lui permet d'être à l'écoute de messages émise selon ce protocole. L'application dédiée peut ainsi récupérer l'ensemble des signaux émis par différents véhicules en mode "advertising", lesdits signaux indiquant notamment qu'ils sont aptes à recevoir des commandes émises par l'application dédiée.

L'application dédiée permet ainsi d'obtenir une liste de véhicules, situés à portée BLE du smartphone et qui ont indiqué dans leur trame d'advertising qu'ils sont susceptibles de recevoir des commandes depuis l'application dédiée installée sur le smartphone. L'utilisateur du smartphone n'a cependant le droit d'utiliser qu'un - ou éventuellement plusieurs - véhicules parmi cette liste de véhicules. Pour déterminer quel véhicule il va utiliser parmi les véhicules pour lesquels il a obtenu des droits, il sélectionne ledit véhicule et entre un code dit code d'appairage spécifique au véhicule considéré. Le code d'appairage lui a été communiqué préalablement dans la mesure où il a reçu des droits pour utiliser le véhicule considéré. Le code d'appairage est le plus souvent un code qui saisi sur le smartphone lors de la phase d'authentification utile à l'appairage. Dans un mode alternatif ce code d'appairage peut être reçu par le smartphone par NFC ou via la camera (QR code ou code barre).Le smartphone et le véhicule sont alors appairés. Bien évidemment, si l'utilisateur compose un code d'appairage qui n'est pas le code attendu par le véhicule, l'appairage ne s'opère pas.

Une fois le smartphone et le véhicule appairés, ils peuvent échanger des signaux, par exemple sous la forme de requêtes, de challenges, et/ou de réponses sous forme sécurisée. En effet, avantageusement, lors de l'opération d'appairage, des clés de chiffrement ont été échangées entre le véhicule et le smartphone qui permettent de chiffrer/déchiffrer les signaux échangés. Dans un autre mode de fonctionnement, le véhicule n'accepte de recevoir des commandes depuis un smartphone que si ces deux dispositifs ont été préalablement appariés.

Le mécanisme d'appairage entre un smartphone et un véhicule est avantageux dans la mesure où il sécurise les échanges entre ces deux dispositifs. Il est cependant contraignant, car il oblige l'utilisateur du smartphone à :

- Identifier le véhicule auquel il a droit parmi une liste de véhicules qui lui sont proposés par son application dédiée. La liste de véhicules étant constituée de l'ensemble des véhicules à proximité du smartphone et aptes à recevoir des commandes depuis l'application dédiée, ladite liste peut être importante dans le cas par exemple où l'utilisateur se trouve dans une agence d'utilisation de véhicules. Il n'est alors pas immédiat pour l'utilisateur d'identifier le véhicule qui lui est destiné.
- Avoir préalablement obtenu le code d'appairage associé au véhicule auquel il a droit. Ce code aura dû lui être remis le plus souvent par une tierce personne. Il devra alors le mémoriser, ou le noter, et le conserver jusqu'à l'accès au véhicule auquel il a droit.
- Saisir le code d'appairage dans l'application dédiée installée sur son smartphone.

Le mécanisme d'appairage est d'autant plus contraignant qu'il peut, en fonction des conditions d'utilisation du véhicule, être répété à plusieurs reprises.

Le document US 2014/169564 A1 fait partie de l'état de l'art pertinent.

## EXPOSE DE L'INVENTION

L'invention vise à remédier à tout ou partie des inconvénients de l'état de la technique identifiés ci-dessus, et notamment à proposer un procédé de reconnaissance automatique entre un appareil mobile de communication, par exemple de type smartphone, et un véhicule automobile au moyen de signaux échangés selon le protocole BLE, ledit procédé d'authentification ne nécessitant plus la mise en œuvre du mécanisme d'appairage, mais présentant néanmoins un sécurisation optimale des échanges entre le véhicule et l'appareil mobile.

A cet effet, on propose, dans l'invention, notamment d'émettre des trames comportant des informations d'authentification depuis le véhicule V dans un mode advertising du protocole BLE, trames qui seront reconnues par le smartphone et par lui seul.

La présente invention est définie par un procédé selon la revendication indépendante 1.

## BREVE DESCRIPTION DES FIGURES

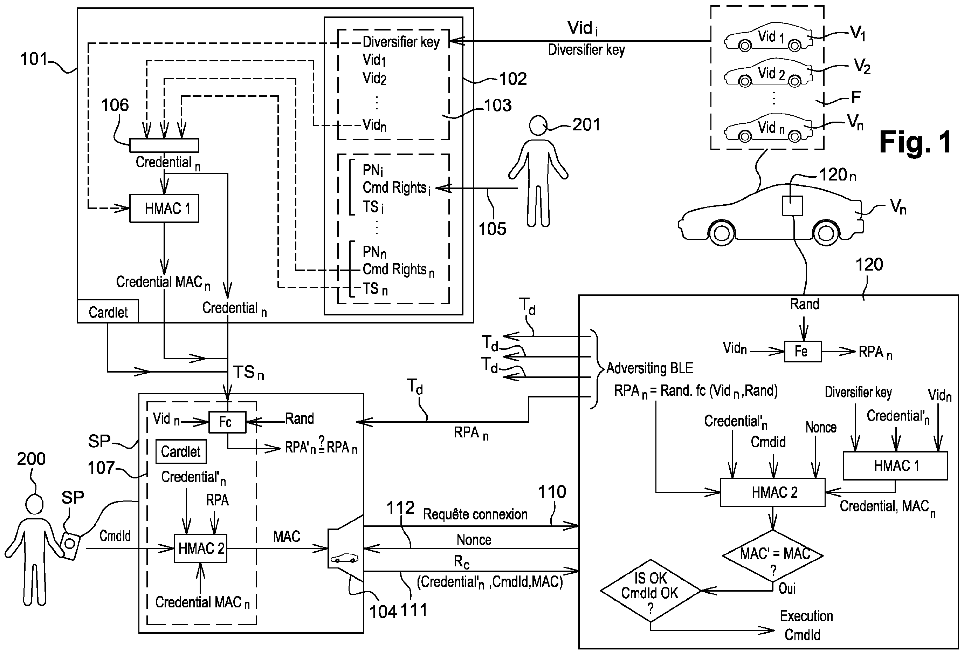

D'autres caractéristiques et avantages de l'invention ressortiront à la lecture de la description qui suit, en référence à la figure annexée, figure 1 unique, qui montre une représentation schématique des différents éléments intervenant dans un exemple de mise en œuvre du procédé selon l'invention.

## DESCRIPTION DETAILLEE D'UN MODE DE REALISATION

Dans un mode de réalisation non limitatif de l'invention on procède comme suit, Dans une première phase, pour l'ensemble des véhicules Vi donné disposant d'un service spécifique (i variant de 1 à n, n étant un nombre entier correspondant au nombre de véhicules), un serveur distant 101 dispose dans une base de données 102 d'un ensemble d'informations confidentielles 103 relatif à chaque véhicule Vi. Le serveur distant 101 dsipose ainsi, pour chaque véhicule Vid'un premier code secret Vidi spécifique pour chaque véhicule Vi considéré, et un deuxième code secret DiversifierKey qui sera utilisé pour générer une pluralité de clés virtuelles. Dans un mode alternatif préférentiel non schématisé, un ou plusieurs code(s) « DiversifierKey » différent(s) est/sont associé(s) à chaque Vidi.. Les « DiversifierKey » peuvent être obtenu en fonction de Vidi et/ou d'une autre donnée comme par exemple une donnée incrémentée.

Dans une phase suivante, il est nécessaire de définir des droits pour chaque véhicule Vi. Aux droits considérés pour chaque véhicule Vi sont associés, pour chaque futur utilisateur 200 équipé d'un appareil mobile de communication SP, par exemple de type Smartphone, une ou plusieurs informations parmi les suivantes :

- Une période TSi d'utilisation autorisée pour chaque utilisateur considéré; cette période d'utilisation peut être définie par exemple par un intervalle compris entre une première date et une deuxième date, ou bien par une date de début d'utilisation et une durée maximale d'utilisation Dmax véhicule Vi;

- Une liste de droits CmdRightsi; cette liste de droits CmdRightsi définit les actions, les commandes, que peut effectuer chaque utilisateur considéré sur le véhicule Vi en utilisant une application dédiée 104 de son appareil mobile SP. On définit ainsi par exemple que l'utilisateur 200 a le droit d'ouvrir tout ou partie du véhicule Vi (par exemple un certain nombre de fois)), de démarrer le véhicule Vi, de garer le véhicule Vi, d'utiliser le véhicule selon certaines conditions(vitesse limite, distance parcourue, la zone géographique ...)

Pour définir ces droits, un utilisateur autorisé 201, généralement le propriétaire du véhicule, se connecte au serveur distant 101, avantageusement au moyen d'une communication sécurisée 105 par exemple au moyen d'un mot de passe que doit posséder l'utilisateur autorisé 201. Le propriétaire 201 décide ainsi pour chaque véhicule Vi, quels seront les utilisateurs autorisés et les droits associés à chaque utilisateur. A cet effet, il communique au serveur distant lesdits droits en question pour chaque futur utilisateur., ainsi qu'un identifiant de chaque utilisateur. considéré. Avantageusement, l'identifiant de l'utilisateur. est son numéro de téléphone mobile PNi. Dans d'autres exemples, l'identifiant peut être le numéro IMEI du téléphone mobile, ou un numéro d'identification de la carte SIM (numéro IMSI) du futur utilisateur..

Le serveur distant 101, à partir des informations renseignées par le propriétaire 201 et du premier code secret Vidi du véhicule Vi, génère, au moyen d'une unité de calcul 106, un code d'accréditation Credentiali. Le code d'accréditation Credentiali peut dans un mode de réalisation non limitatif être généré au moyen de l'untié de calcul 106 par une simple concaténation des données qui viennent d'être mentionnées (Droits CmdRightsn du locataire 200 considéré, période d'utilisation TSi autorisée, et premier code secret Vidi du véhicule Vi).. Dans un mode alternatif on omet d'utiliser dans la concatennation le Vidi. Le code d'accréditation Credentiali est donc spécifique à un utilisateur, à un véhicule donné, et aux droits qu'a l'utilisateur sur le véhicule Vi considéré.

Dans un mode de réalisation, le serveur distant 101 génère alors, à partir du code d'accréditation Credentiali et du deuxième code secret DiversifierKey du véhicule Vi , au moyen d'un premier module de cryptage une signature, ou code d'authentification, CredentialMACi qui sera associé au code d'accréditation Credentiali, afin d'authentifier ultérieurement ledit code d'accréditation Credentiali. Dans une alternative, le serveur distant 101 génère le code d'authentification CredentialMACi, à partir du deuxième code secret DiversifierKey et du code Vidi . Ce cryptage, HMAC1, peut par exemple être un cryptage du type HMAC pour Hashed Message Authentification Code en langue anglaise, ou un cryptage du type AES pour Advanced Encryption Standard. Le code d'authentification CredentialMACi permet en outre de s'assurer que l'utilisateur 200 sera limité dans ses actions aux droits qui lui sont conférés par son code d'accréditationCredentiali; il permet ultérieurement la validation par le véhicule Vi des desiderata de l'utilisateur par rapport aux autorisations contenues dans le code d'accréditationCredentiali.

Une fois le code d'accréditation Credentiali et sa signature CredentialMACi créés par le serveur distant 101, ils sont, ainsi que le code Vidi, transférés et mémorisés dans une zone sécurisée 107 du smartphone SP du locataire 200 associé à la clé virtuelle CredentialMACi qui a été généré spécifiquement pour ce locataire 200. La zone sécurisée 107 du smartphone peut être par exemple la carte SIM ou tout autre élément sécurisé disposé sur le smartphone. Dans un mode de réalisation alternatif la zone sécurisée 107 peut être représentée par un élement sécurisée virtuelle.. Cette opération de mémorisation ne peut être réalisée que par un opérateur autorisé à effectuer une telle opération d'écriture dans la zone sécurisée. Cette entité est connue sous le nom de TSM (Trusted Service Manager en langue anglaise). Le transfert de la clé virtuelle et de sa signature est effectué en utilisant le numéro de téléphone PNn de l'utilisateur 200, numéro de téléphone PNn qui avait été communiqué au serveur distant 101 par l'utilisateur autorisé 201.

Dans le même temps, et toujours par l'opérateur autorisé TSM, on mémorise dans la zone sécurisée 107 un élément logiciel, dit Cardlet dans le cas d'un carte SIM. L'élément logiciel Cardlet est une application spécifique qui permettra notamment à l'application dédiéed'interagir avec les codes mémorisés dans la zone sécurisée 107 que sont CredentialMACi, Credentiali et Vidi sans pour autant divulguer spécifiquement les codes CredentialMACi et Vidi. Le code Credentiali sera quant à lui transmis entre autre code par l'application dédiée au véhicule. La sécurisation du processus est ainsi renforcée. Une fois ces différents éléments mémorisés dans la zone sécurisée 107, le smartphone SP a la possibilité de transmettre des commandes au véhicule Vi via l'application dédiée 104.

A cet effet, on procède, dans l'invention, à un processus de reconnaissance, par le smartphone SP du véhicule Vi que l'utilisateur 200 - possesseur du smartphone SP- est autorisé à emprunter.

Les différentes étapes de ce processus de reconnaissance sont à présent détaillées :

- Dans une première étape, qui est répétée régulièrement, le véhicule Vi, ou plus précisément un module électronique 120 du véhicule Vi, apte à fonctionner selon le protocole BLE, placé en mode advertising, émet régulièrement une trame de données Td,. Selon l'invention, la trame de données comporte une donnée d'identification RPA qui est calculée, dans un premier exemple, par une fonction de cryptage Fc à partir du premier code secret Vidi spécifique au véhicule Vi ; on peut alors écrire RPAi=Fc(Vidi).

- Dans un deuxième exemple, correspondant à l'exemple illustré, la donnée d'identification RPAi est obtenue par l'association ou concaténation (ASSOC) d'une donnée aléatoire Rand et d'un résultat Fc(Vidi, Rand) obtenu par l'application de la fonction de cryptage sur le premier code secret Vidi et sur la donnée aléatoire Rand ; on peut alors écrire RPAi=Rand. (ASSOC) Fc(Vidi,Rand). Ce deuxième exemple présente l'avantage que la valeur de la donnée d'identification RPA peut ou non varier d'une émission à l'autre, en faisant ou non varier le RAND d'une émission à l'autre., ce qui empêche de deviner, quelle sera la valeur de la donnée d'identification RPA suivante.

- Dans un troisième exemple de réalisation, la donnée d'identification RPAi est obtenue par une fonction de cryptage Fc à partir du premier code secret Vidi spécifique au véhicule Vi et d'une donnée DATA qui est variable. On peut alors écrire RPAi=Fc(Vidi, DATA). Les valeur DATA ne sont connues que par le véhicule Vi et le smartphone SP. Les valeurs DATA peuvent être, selon un exemple non limitatif, issues d'un générateur pseudo-aléatoire dont la valeur racine est connue, ou d'un compteur d'incréments prédéterminés, ou issues d'une horloge. Cet exemple présente l'avantage que la valeur de la donnée d'identification RPA peut ou non varier d'une émission à l'autre, en faisant ou non varier les valeurs DATA d'une émission à l'autre, ce qui empêche de deviner, quelle sera la valeur de la donnée d'identification RPA suivante.

- Dans un quatrième exemple de réalisation, la donnée d'identification RPAi est obtenue par la concaténation (ASSOC) d'une donnée DATA" et d'un résultat Fc(Vidi, DATA',DATA") obtenu par l'application de la fonction de cryptage sur le premier code secret Vidi et sur les donnée DATA', DATA". On peut alors écrire RPAi=DATA" (ASSOC) Fc(Vidi, DATA', DATA"). Les valeur DATA' ne sont connues que par le véhicule Vi et le smartphone SP. Les valeurs DATA' peuvent être, selon un exemple non limitatif, issues d'un générateur pseudo-aléatoire dont la valeur racine est connue, ou d'un compteur d'incréments prédéterminés, ou issues d'une horloge.

En résumé pour englober tous les exemples de réalisation la donnée d'idention RPAi peut se traduire selon la formule :
RPAi = M (ASSOC) Ri , avec Ri= Fc(Vidi, M, N) où M, N sont des données variable de respectivement m et n bits (m et n étant des nombres entiers).
Ainsi :

- le premier exemple de réalisation correspond au cas où m=n=0

- le deuxième exemple de réalisation correspond au cas n=0 et m≠0

- le troisième exemple de réalisation correspond au cas n≠0 et m=0

- le quatrième exemple de réalisation correspond au cas n≠0 et m≠0

- Dans une deuxième étape, lorsque le smartphone SP en mode "scanning" reçoit la trame de données Td, et donc la donnée d'identification RPAi, il calcule de son côté un code crypté de contrôle R'i. Cette opération de contrôle s'effectue dans la zone sécurisée 107 au moyen de la fonction de cryptage Fc, identique à la fonction de cryptage présente dans le véhicule Vi ; cette dernière a été mémorisée dans la zone sécurisée 107 par l'intermédiaire de l'élément logiciel cardlet qui comporte cette fonction de cryptage Fc. La formule de R'i est la suivante :

$$R'i=Fc(Vidi, M, N)$$

la donnée M ayant été reçue lors de l'envoi de RPAi, la donnée N étant une donnée obtenue par le smartphone SP.

Dans le cas où le smartphone SP reçoit une trame de données TD' émise par un autre véhicule Vi' que celui pour lequel une utilisation a été autorisée, le premier code secret Vidi utilisé pour calculer le code crypté de contrôle R'i donnera un résultat différent (R'i= Fc(Vidi, M', N)) du code crypté Ri la trame de données TD' (Ri= Fc(Vidi', M', N')).
Ainsi dans le premier exemple considéré (RPAi=Fc(Vidi)), on utilise simplement le premier code secret Vidi, qui avait été communiqué à la zone sécurisée 107 par l'intermédiaire de l'accreditation Credentiali, pour réaliser le calcul de la donnée d'identification de contrôle Ri. On a alors R'i=Fc(Vidi). La donnée Ri et la donnée de contrôle R'i ne seront égales que si le premier code secret Vidi mémorisé dans la zone de mémoire sécurisée est identique au premier code secret Vidi du véhicule Vi émettant la trame de données TD. Dans le cas où le smartphone SP reçoit une trame de données TD' émise par un autre véhicule Vi' que celui pour lequel une location a été autorisée, le premier code secret Vidi utilisé pour calculer la donnée de contrôle R'i = Fc(Vidi) donnera un résultat différent de la donnée d'identification Ri' = Fc(Vidi') de la trame de données TD'.
Dans le deuxième exemple considéré (RPAi=Rand.CONCAT Fc(Vidi,Rand)), on utilise d'une part le premier code secret Vidi communiqué à la zone sécurisée par l'intermédiaire de l'accréditation Credentiali et d'autre part la donnée aléatoire Rand transmise dans la trame de données Td depuis le véhicule Vi vers le smartphone SP. On calcule alors la donnée d'identification de contrôle RPA'i de la manière suivante : RPA'i= Fc(Vidi,Rand). La partie Fc(Vidi,Rand) de la donnée d'identification RPAi est comparée à la donnée d'identification de contrôle RPA'i, et elles ne seront égales que si le premier code secret Vidi mémorisé dans la zone de mémoire sécurisée est identique au premier code secret Vidi du véhicule Vi émettant la trame de données Td, ce qui est le cas dans l'exemple illustré. Dans le cas où le smartphone SP reçoit une trame de données Tdi émise par un autre véhicule Vi que celui pour lequel une utilisation a été autorisée, le premier code secret Vidi utilisé pour calculer la donnée d'identification de contrôle Rpa'i donnera un résultat différent de la partie Fc(Vidi,Rand) de la donnée d'identification Rpai transmise dans la trame de données Tdi.

Selon les troisième et quatrième exemples de réalisation pour l'obtention de la donnée d'identification RPAi du véhicule, on procédera dans le smartphone SP, de manière identique au deuxième exemple de réalisation, pour obtenir RPA'i, et ainsi la partie Fc(Vidi,DATA) ou la partie Fc(Vidi, DATA', DATA") de la donnée d'identification RPAi et la donnée d'identification de contrôle RPA'i ne seront égales que si le premier code secret Vidi mémorisé dans la zone de mémoire sécurisée est identique au premier code secret Vidi du véhicule Vi émettant la trame de données Td, et que si le smartphone SP dispose également de la donnée DATA (troisième exemple), ou DATA' (quatrième exemple) .

Dans un mode de réalisation alternatif non décrit, l'association utilisé précédemment sous forme de concaténation peut être remplacée par une offuscation ou une opération de mélange.

Ainsi, en étant placé dans un mode de "scanning" de tous les véhicules susceptibles d'échanger des données selon le protocole BLE, le smartphone SP reconnaitra le véhicule Vi que l'utilisateur - utilisateur du smartphone considéré - est autorisé à utiliser. Une fois cette reconnaissance effectuée, le smartphone SP émet une requête de connexion 110 à destination du véhicule Vi, avantageusement toujours selon le protocole BLE.

A ce stade, les échanges entre le smartphone SP et le véhicule Vi ont permis au smartphone SP d'identifier le véhicule Vi pour lequel il a une autorisation, et le deux équipements smatphone SP et véhicule Vi sont en mode connecté.

Les étapes que nous allons maintenant décrire doivent permettre au véhicule Vi d'authentifier une commande envoyée par le smartphone SP.

Une fois la connexion établie entre le smartphone SP et le véhicule Vi, comme le smartphone SP et le véhicule Vi n'ont pas été appairés, lors des étapes d'exécution d'une commande désirée (verrouillage, déverrouillage,...) il est préférable d'établir un processus d'authentification plus forte. C'est-à-dire qu'associé à la demande de commande, le smartphone SP devra y associer une réponse à un défi du véhicule Vi.

Dans un premier mode de réalisation, le défi est envoyé par le véhicule Vi une fois la connexion établie. Le smartphone SP y répond avec l'envoi de la commande spécifique (verrouillage, déverrouillage,...).

Dans un mode de réalisation avantageux, le défi envoyé par le véhicule est matérialisé au cours de l'envoi du RPa. Le smartphone SP interprète ce défi sur la base de toute ou partie du RPa envoyé et y répond comme dans le cas précédent avec l'envoi de la commande spécifique (verrouillage, déverrouillage,...).

Le processus d'authentification est le suivant :

- Dans un premier temps, une commande désirée CmdId par l'utilisateur, par exemple la commande "ouverture du véhicule" est envoyée à un deuxième module de cryptage présent dans la zone sécurisée 107. Ce deuxième module de cryptage HMAC2 du type HMAC, reçoit également la donnée d'identification RPAi émise par le véhicule Vi et un code d'accréditation simplifié Credential'i qui correspond au code d'accréditation Credentiali - préalablement mémorisé dans la zone sécurisée 107 - dans lequel l'information relative au premier code secret Vidi a été retirée pour ne pas être divulgé. Le deuxième module de cryptage reçoit enfin la signature CredentialMACi du code d'accréditation Credentiali, qui avait également été mémorisée dans la zone sécurisée 107.

- A partir de ces informations, le deuxième module de cryptage calcule un premier code de vérification MAC.

- Une fois le code de vérification MAC établi, le smartphone SP émet, à destination du véhicule Vi, avantageusement toujours selon le protocole BLE, une requête 111 de commande Rc comportant notamment le code d'accréditation simplifié Credential'i, la commande désirée CmdID et le premier code de vérification MAC.

- De son côté, le véhicule Vi effectue les mêmes calculs : à partir du code d'accréditation simplifié Credential'i, du premier code secret Vidi et du deuxième code secret DiversifierKey, il recalcule le code d'authentification CredentialMACi du code d'accréditation Credentiali au moyen du premier module de cryptage HMAC1 qui est également présent dans le module électronique 120 du véhicule Vi. La signature CredentialMACi est alors fournie au deuxième module de cryptage HMAC2, identique au module de cryptage de la zone sécurisée 107 de; le deuxième module de cryptage reçoit également la donnée d'identification de contrôle RPAi, par l'intermédiaire de la requête de commande Rc, la commande désirée CmdID, le code d'accréditation simplifié Credential'i et peut ainsi calculer un deuxième code de vérification MAC'. Si le premier code de vérification MAC et le deuxième code de vérification MAC' sont identiques, alors la commande désirée Cmld sera effectuée par le véhicule Vi, sous réserve que la commande désirée Cmld soit bien dans la liste des droits CmdRightsi, et que le moment Real-Time où sont réalisés ces vérifications appartienne bien à la période d'utilisation autorisée TSi. Dans un mode de réalisation alternatif, l'orde des vérifications peut être inversé, cad on commence par tester les informations en clairs Credential'i et CmdID puis si et seulement si ils sont validés on vérifie les codes d'authentifications CredentialMACi et MAC

- Dans un mode de mise en œuvre avantageux, pour le calcul du code de vérification MAC, le véhicule Vi envoie au smartphone SP, dans une transmission 112, une variable complémentaire Nonce. Avantageusement, la variable complémentaire Nonce adopte une valeur qui n'est utilisée qu'une fois ; tout envoi ultérieur par le véhicule Vi de cette variable complémentaire Nonce adoptera une valeur différente. La variable complémentaire Nonce est utilisée par le deuxième module de cryptage HMAC2 de la zone de mémoire sécurisée 107 dans l'élaboration du code de vérification MAC, et par le deuxième module de cryptage HMAC2, du véhicule Vi, pour l'élaboration du deuxième code de vérification MAC'. On apporte ainsi une sécurité supplémentaire

Dans l'invention, on assure ainsi un échange sécurisé de données entre un smartphone et un véhicule échangeant selon le protocole BLE, le tout au moyen d'un processus simplifié, aucun code d'appairage n'ayant besoin d'être renseigné par un utilisateur.

## Revendications

1. Procédé de reconnaissance automatique entre un appareil électronique mobile (SP) et un véhicule automobile (Vi) équipé d'un module électronique (120) de communication, ledit appareil électronique mobile (SP) et le module électronique (120) du véhicule (Vi) étant aptes à fonctionner selon le protocole BLE, l'appareil électronique mobile (SP) étant dans un mode « scanning » et le module électronique (120) de communication du véhicule (Vi) étant dans un mode « advertising » le procédé étant tel qu'il comporte les différentes étapes consistant à :

- Dans le module électronique (120) du véhicule (Vi), obtenir une donnée d'identification (RPAi) du véhicule (Vi) ;
- Recevoir d'un serveur distant (101) dans une zone sécurisée (107) de l'appareil électronique mobile (SP) un code secret (Vidi) du véhicule (Vi), un code d'accréditation Credentiali et une signature CredentialMACi associée au code d'accréditation Credentiali afin d'authentifier ultérieurement ledit code d'accréditation Credentiali, le code d'accréditation Credentiali étant spécifique à un utilisateur, à un véhicule donné, et aux droits qu'a un utilisateur sur le véhicule automobile (Vi), ledit code d'accréditation Credentiali et ladite signature CredentialMACi étant préalablement créés par ledit serveur distant (101);
- Emettre depuis le module électronique (120) du véhicule (Vi) vers l'appareil électronique mobile (SP), au moins une trame de données (Td) comportant la donnée d'identification (RPAi) du véhicule (Vi);
- Recevoir dans l'appareil électronique mobile (SP) placé dans le mode "scanning" la au moins une trame de données (Td) contenant la donnée d'identification (RPAi) du véhicule (Vi);
- Vérifier dans l'appareil électronique mobile (SP) que la donnée d'identification (RPAi) transmise est valide, puis émettre depuis l'appareil électronique mobile (SP) vers le module électronique (120) du véhicule (Vi) une requête de connexion (110),

le procédé étant tel que la donnée d'identification (Rpai) du véhicule (Vi), s'énonce selon formule :

$$RPAi = ASSOC\ (M,\ Ri)$$

avec Ri= Fc(Vidi, M, N) où :

- M, N sont des données variables de respectivement m et n bits, m et n étant des nombres entiers ou nuls ;
- Fc est une fonction de cryptage ;
- Vidi est le code secret du véhicule Vi
- ASSOC est une fonction qui associe les données entre elles sous forme de concaténation, d'offuscation ou d'une opération de mélange,

et en ce que tout ou partie de la trame de données (Td) envoyée depuis le module électronique (120) du véhicule (Vi) vers l'appareil électronique mobile (SP) est utilisée comme défi auquel doit répondre l'appareil électronique mobile (SP) pour exécuter une action sur le véhicule, et ce de la manière suivante :

- Dans un premier temps, une commande désirée CmdId par l'utilisateur, est envoyée à un module de cryptage du type HMAC présent dans la zone sécurisée (107), ce module de cryptage recevant également la donnée d'identification RPAi émise par le véhicule (Vi) et un code d'accréditation simplifié Credential'i qui correspond au code d'accréditation Credentiali dans lequel l'information relative au premier code secret Vidi a été retirée pour ne pas être divulgué ainsi que la signature CredentialMACi du code d'accréditation Credentiali ;
- A partir de ces informations, le module de cryptage calcule un premier code de vérification MAC;

- Une fois le code de vérification MAC établi, l'appareil électronique mobile (SP) émet, à destination du véhicule Vi selon le protocole BLE, une requête (111) de commande Rc comportant notamment le code d'accréditation simplifié Credential'i, la commande désirée CmdID et le premier code de vérification MAC de sorte que le véhicule puisse déterminer un second code de vérification MAC et s'assurer qu'il est identique au premier code de vérification MAC, auquel cas exécuter l'action sur le véhicule correspondant à la commande désirée CmdID.

2. Procédé de reconnaissance automatique selon la revendication 1 **caractérisé en ce que** :

   - $m = n = 0$

3. Procédé de reconnaissance automatique selon la revendication 1 **caractérisé en ce que** :

   - $m = 0$
   - $n \neq 0$

4. Procédé de reconnaissance automatique selon la revendication 1 **caractérisé en ce que** :

   - $m \neq 0$
   - $n = 0$

5. Procédé de reconnaissance automatique selon la revendication 1 **caractérisé en ce que** :

   - $m \neq 0$
   - $n \neq 0$

6. Procédé de reconnaissance automatique selon la revendication 1 et l'une des revendication 2 à 5, **caractérisé en ce que** l'appareil électronique mobile (SP) calcule de son côté un code crypté de contrôle R'i. selon la formule :

$$R'i = Fc(Vidi, M, N)$$

7. Procédé de reconnaissance automatique selon la revendication 6 **caractérisé en ce que** l'étape consistant à vérifier dans l'appareil électronique mobile (SP) que la donnée d'identification (RPAi) transmise est valide consiste en une comparaison d'égalité entre Ri et R'i.

8. Procédé de reconnaissance automatique selon l'une des revendication 1 à 7, **caractérisé en ce que** dans tout ou partie de la trame de données (Td) envoyée depuis le module électronique (120) du véhicule (Vi) vers l'appareil électronique mobile (SP), la donnée d'identification (RPAi) du véhicule (Vi) peut ou non varier d'une émission à l'autre en se basant sur les données (M, N).

## Patentansprüche

1. Automatisches Erkennungsverfahren zwischen einem mobilen elektronischen Gerät (SP) und einem mit einem elektronischen Kommunikationsmodul (120) ausgestatteten Kraftfahrzeug (Vi), wobei das mobile elektronische Gerät (SP) und das Elektronikmodul (120) des Fahrzeugs (Vi) gemäß dem BLE-Protokoll arbeiten können, wobei das mobile elektronische Gerät (SP) in einem "Scanning"-Modus und das elektronische Kommunikationsmodul (120) des Fahrzeugs (Vi) in einem "Advertising"-Modus ist, wobei das Verfahren so ist, dass es die verschiedenen Schritte aufweist, die darin bestehen:

   - im Elektronikmodul (120) des Fahrzeugs (Vi) einen Identifikationsdatenwert (RPAi) des Fahrzeugs (Vi) zu erhalten;
   - von einem fernen Server (101) in einem gesicherten Bereich (107) des mobilen elektronischen Geräts (SP) einen Geheimcode (Vidi) des Fahrzeugs (Vi), einen Akkreditierungscode Credentiali und eine dem Akkreditierungscode Credentiali zugeordnete Signatur CredentialMACi zu empfangen, um später den Akkreditierungscode Credentiali zu authentifizieren, wobei der Akkreditierungscode Credentiali für einen Benutzer, ein gegebenes Fahrzeug, und die Rechte spezifisch ist, die ein Benutzer am Kraftfahrzeug (Vi) hat, wobei der Akkreditierungscode Credentiali und die Signatur CredentialMACi vorab vom fernen Server (101) erzeugt werden;
   - vom Elektronikmodul (120) des Fahrzeugs (Vi) an das mobile elektronische Gerät (SP) mindestens einen Datenrahmen (Td) zu senden, der den Identifikationsdatenwert (RPAi) des Fahrzeugs (Vi) enthält;
   - in dem in den "Scanning"-Modus versetzten mobilen elektronischen Gerät (SP) den mindestens einen Datenrahmen (Td) zu empfangen, der den Identifikationsdatenwert (RPAi) des Fahrzeugs (Vi) enthält;
   - im mobilen elektronischen Gerät (SP) zu überprüfen, ob der übertragene Identifikationsdatenwert (RPAi) gültig ist, dann vom mobilen elektronischen Gerät (SP) an das Elektronikmodul (120) des Fahrzeugs (Vi) eine Verbindungsanforderung (110) zu senden,

   wobei das Verfahren so ist, dass der Identifikationsdatenwert (Rpai) des Fahrzeugs (Vi) gemäß der folgenden Formel ausgedrückt wird:

$$RPAi = ASSOC (M, Ri),$$

mit

$$Ri = Fc(Vidi, M, N)$$

in der:

- M, N variable Daten mit m bzw. n Bits sind, wobei m und n ganze Zahlen oder Null sind;
- Fc eine Verschlüsselungsfunktion ist;
- Vidi der Geheimcode des Fahrzeugs Vi ist;
- ASSOC eine Funktion ist, die die Daten in Form einer Verkettung, Obfuskation oder eines Mischvorgangs einander zuordnet,

und dass alles oder ein Teil des Datenrahmens (Td), der vom Elektronikmodul (120) des Fahrzeugs (Vi) an das mobile elektronische Gerät (SP) geschickt wird, als Herausforderung verwendet wird, auf die das mobile elektronische Gerät (SP) reagieren muss, um eine Aktion auf das Fahrzeug auszuführen, und dies folgendermaßen:

- zuerst wird eine vom Benutzer gewünschte Steuerung CmdId an ein Verschlüsselungsmodul des Typs HMAC geschickt, das im gesicherten Bereich (107) vorhanden ist, wobei dieses Verschlüsselungsmodul ebenfalls den vom Fahrzeug (Vi) gesendeten Identifikationsdatenwert RPAi und einen vereinfachten Akkreditierungscode Credential'i, der dem Akkreditierungscode Credentiali entspricht, in dem die Information bezüglich des ersten Geheimcodes Vidi entfernt wurde, um nicht offenbart zu werden, sowie die Signatur CredentialMACi des Akkreditierungscodes Credentiali empfängt;
- ausgehend von diesen Informationen berechnet das Verschlüsselungsmodul einen ersten Überprüfungscode MAC;
- sobald der Überprüfungscode MAC erstellt ist, sendet das mobile elektronische Gerät (SP) an das Fahrzeug Vi gemäß dem BLE-Protokoll eine Steueranfrage Rc (111), die insbesondere den vereinfachten Akkreditierungscode Credential'i, die gewünschte Steuerung CmdID und den ersten Überprüfungscode MAC aufweist, damit das Fahrzeug einen zweiten Überprüfungscode MAC bestimmen und sich vergewissern kann, dass er gleich dem ersten Überprüfungscode MAC ist, in welchem Fall die der gewünschten Steuerung CmdID entsprechende Aktion auf das Fahrzeug ausgeführt wird.

2. Automatisches Erkennungsverfahren nach Anspruch 1, **dadurch gekennzeichnet, dass**:

- m = n = 0

3. Automatisches Erkennungsverfahren nach Anspruch 1, **dadurch gekennzeichnet, dass**:

- m = 0
- n ≠ 0

4. Automatisches Erkennungsverfahren nach Anspruch 1, **dadurch gekennzeichnet, dass**:

- m ≠ 0
- n = 0

5. Automatisches Erkennungsverfahren nach Anspruch 1, **dadurch gekennzeichnet, dass**:

- m ≠ 0
- n ≠ 0

6. Automatisches Erkennungsverfahren nach Anspruch 1 und einem der Ansprüche 2 bis 5, **dadurch gekennzeichnet, dass** das mobile elektronische Gerät (SP) seinerseits einen verschlüsselten Kontrollcode R'i gemäß der folgenden Formel berechnet:

$$R'i = Fc(Vidi, M, N)$$

7. Automatisches Erkennungsverfahren nach Anspruch 6, **dadurch gekennzeichnet, dass** der Schritt, der darin besteh, im mobilen elektronischen Gerät (SP) zu überprüfen, ob der übertragene Identifikationsdatenwert (RPAi) gültig ist, aus einem Gleichheitsvergleich zwischen Ri und R'i besteht.

8. Automatisches Erkennungsverfahren nach einem der Ansprüche 1 bis 7, **dadurch gekennzeichnet, dass** in dem ganzen oder einem Teil des Datenrahmens (Td), der vom Elektronikmodul (120) des Fahrzeugs (Vi) an das mobile elektronische Gerät (SP) geschickt wird, der Identifikationsdatenwert (RPAi) des Fahrzeugs (Vi) von einer Sendung zur anderen variieren kann oder nicht, basierend auf den Daten (M, N).

**Claims**

1. Method for automatic recognition between a mobile electronic device (SP) and a motor vehicle (Vi) provided with an electronic communication module (120), said mobile electronic device (SP) and the electronic module (120) of the vehicle (Vi) being capable of operating according to the BLE protocol, the mobile electronic device (SP) being in a scanning mode and the electronic communication module (120) of the vehicle (Vi) being in an advertising mode, the method being such that it includes the various steps of:

> - obtaining, in the electronic module (120) of the vehicle (Vi), an identification datum (RPAi) for the vehicle (Vi);
> - receiving, from a remote server (101), in a secure zone (107) of the mobile electronic device (SP), a secret code (Vidi) for the vehicle (Vi), an accreditation code Credentiali, and a signature CredentialMACi associated with the accreditation code Credentiali in order subsequently to authenticate said accreditation code Credentiali, the accreditation code Credentiali being specific to a user, to a given vehicle, and to the rights that a user has with respect to the motor vehicle (Vi), said accreditation code Credentiali and said signature CredentialMACi being created beforehand by said remote server (101);
> - transmitting at least one data frame (Td) including the identification datum (RPAi) for the vehicle (Vi) from the electronic module (120) of the vehicle (Vi) to the mobile electronic device (SP);
> - receiving, in the mobile electronic device (SP), which is placed in scanning mode, the at least one data frame (Td) containing the identification datum (RPAi) for the vehicle (Vi);
> - verifying, in the mobile electronic device (SP), that the transmitted identification datum (RPAi) is valid, and then transmitting a connection request (110) from the mobile electronic device (SP) to the electronic module (120) of the vehicle (Vi),

the method being such that the identification datum (Rpai) for the vehicle (Vi) is expressed according to the formula:

$$RPAi = ASSOC\ (M,\ Ri),$$

with $Ri = Fc(Vidi, M, N)$
where:

> - M and N are variable data of m and n bits, respectively, m and n being integers or zeros;
> - Fc is an encryption function;
> - Vidi is the secret code for the vehicle Vi;
> - ASSOC is a function which associates the data with one another in the form of concatenation, obfuscation or a mixing operation,

and in that the entirety or a part of the data frame (Td) sent from the electronic module (120) of the vehicle (Vi) to the mobile electronic device (SP) is used as a challenge to which the mobile electronic device (SP) has to respond in order to perform an action on the vehicle, in the following manner:

> - initially, a command CmdId desired by the user is sent to an HMAC-type encryption module that is present in the secure zone (107), this encryption module also receiving the identification datum RPAi transmitted by the vehicle (Vi) and a simplified accreditation code Credential'i, which corresponds to the accreditation code Credentiali from which the information relating to the first secret code Vidi has been removed so that it is not disclosed, and also the signature CredentialMACi of the accreditation code Credentiali;
> - on the basis of this information, the encryption module computes a first verification code MAC;
> - once the verification code MAC has been established, the mobile electronic device (SP) transmits, to the vehicle Vi, according to the BLE protocol, a command request Rc (111) including in particular the simplified accreditation code Credential'i, the desired command CmdID and the first verification code MAC, such that the vehicle is able to determine a second verification code MAC and make certain that it is identical to the first verification code MAC, in which case the action on the vehicle that corresponds to the desired command CmdID is performed.

2. Automatic recognition method according to Claim 1, **characterized in that**:

> - $m = n = 0$.

3. Automatic recognition method according to Claim 1, **characterized in that**:

> - $m = 0$
> - $n \neq 0$.

4. Automatic recognition method according to Claim 1, **characterized in that**:

> - $m \neq 0$
> - $n = 0$.

5. Automatic recognition method according to Claim 1, **characterized in that**:

> - $m \neq 0$
> - $n \neq 0$.

6. Automatic recognition method according to Claim 1 and one of Claims 2 to 5, **characterized in that** the mobile electronic device (SP) in turn computes an encrypted check code R'i according to the formula:

$$R'i = Fc(Vidi, M, N).$$

7. Automatic recognition method according to Claim 6, **characterized in that** the step of verifying, in the mobile electronic device (SP), that the transmitted identification datum (RPAi) is valid consists in an equality comparison between Ri and R'i.

8. Automatic recognition method according to one of Claims 1 to 7, **characterized in that**, in the entirety or a part of the data frame (Td) sent from the electronic module (120) of the vehicle (Vi) to the mobile electronic device (SP), the identification datum (RPAi) for the vehicle (Vi) may or may not vary from one transmission to the next, based on the data (M, N).

**Fig. 1**

**EP 3 262 860 B1**

## RÉFÉRENCES CITÉES DANS LA DESCRIPTION

**Documents brevets cités dans la description**

- US 2014169564 A1